# EUROPEAN PATENT APPLICATION

(11) **EP 1 534 005 A2**
(43) Date of publication of application: **25.05.2005**
(21) Application number: 05002722.6
(22) Date of filing: 26.02.2002
(51) Int. Cl.: H04N 5/76, H04N 7/173

(54) **Method and apparatus for recording broadcast data**

(30) Priority: 05.03.2001 US 273919 P; 28.06.2001 US 895869
(62) Divisional of application: 02004441.8
(71) Applicant: MICROSOFT CORPORATION, Redmond, WA 98052 (US)
(72) Inventor: Gates, Matthijs A., Seattle Washington 92112 (US); Srinivasan, Jai, Kirkland Washington 98033 (US); Sankaranamayan, Mukund, Issaquah Washington 98029 (US); Chakrabarti, Alok, Bellevue Washington 98006 (US)
(74) Representative: Grünecker, Kinkeldey, Stockmair & Schwanhäusser Anwaltssozietät

(57) **Abstract**

A system receives a broadcast data stream that is encoded using any encoding format. The received broadcast data stream is demultiplexed and stored on a storage device. In response to a command to play back the stored broadcast data stream, the stored data stream is retrieved and rendered in a manner that corresponds to the play back command. Multiple systems may retrieve the stored broadcast data stream simultaneously.

## Description

### RELATED APPLICATIONS

This application claims the benefit of U.S. Provisional Application No. 60/273,919 filed March 5, 2001, the disclosure of which is incorporated by reference herein.

### TECHNICAL FIELD

The present invention relates to data recording systems and, more particularly, to a system capable of recording data in various formats to perform time shifting and recording operations.

### BACKGROUND

Time shifting is the ability to perform various operations on a broadcast stream of data; i.e., a stream of data that is not flow-controlled. Example broadcast streams include digital television broadcasts, digital radio broadcasts, and Internet Protocol (IP) multicasts across a network, such as the Internet. A broadcast stream of data may include video data and/or audio data. Time shifting allows a user to "pause" a live broadcast stream of data without loss of data. Time shifting also allows a user to seek forward and backward through a stream of data, and play back the stream of data forward or backward at any speed. This time shifting is accomplished using a storage device, such as a hard disk drive, to store a received stream of data.

A DVR (digital video recorder or digital VCR) provides for the long term storage of a stream of data, such as a television broadcast. A DVR also uses a storage device, such as a hard disk drive, to store a received stream of data. A time shifting device and a DVR may share a common storage device to store one or more data streams.

Existing time shifting and DVR systems operate at the transport/file format layer and support a single encoding format (typically MPEG-2). Thus, these existing systems are limited to handling streams of data encoded using the MPEG-2 format. These systems are limited in their usefulness because they cannot be used to process data streams encoded using a different format and they can only handle content that has a defined way of being stored in MPEG-2 files. If a new or modified encoding format becomes popular in the future, these systems will require modification to support a different encoding format before receiving a data stream employing the new encoding format. Alternatively, certain existing systems may require replacement with a new system capable of processing data streams using the new encoding format.

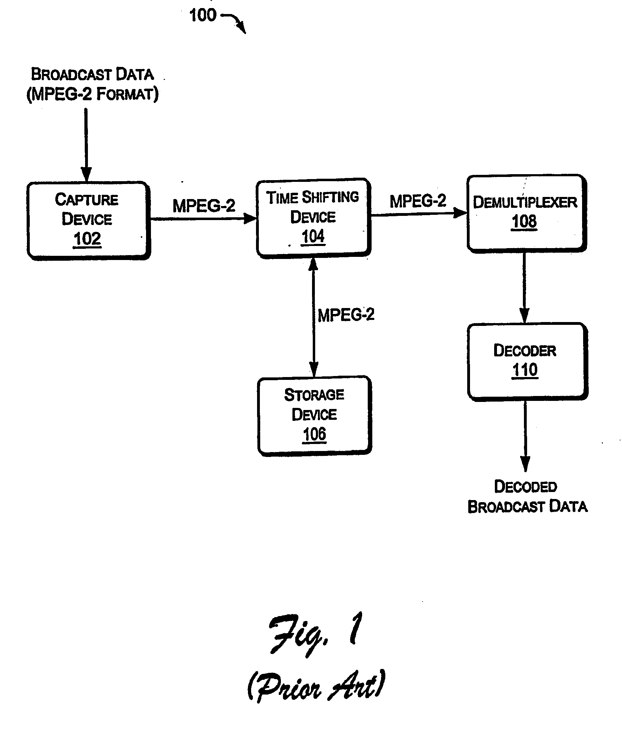

Fig. 1 illustrates a block diagram of an exemplary prior art time shifting system 100 capable of processing MPEG-2 broadcast data. A capture device 102 receives a stream of broadcast data in the MPEG-2 format. Capture device 102 provides the captured MPEG-2 data to a time shifting device 104, which stores the data on a storage device 106 in MPEG-2 format. Storage device 106 is a hard disk drive. Time shifting device 104 is also capable of retrieving stored data from storage device 106 and providing the data to a demultiplexer 108, which separates out the various components (e.g., audio and video components) in the broadcast data. The various components are then provided to a decoder 110, which decodes the data and provides the decoded data to a device (not shown) that renders or otherwise processes the decoded data. As shown in Fig. 1, system 100 is dedicated to processing data streams encoded using MPEG-2. System 100 is not capable of processing data streams having an encoding format other than MPEG-2.

The systems and methods described herein address these limitations by providing a time shifting and DVR system that is not limited to data streams having a particular format.

### SUMMARY

The systems and methods described herein implement various time shifting and DVR functions on a broadcast data stream regardless of the encoding procedure used to create the broadcast data stream. The time shifting and DVR functions described herein can be used with a variety of different formats, including later-developed formats. The procedures and systems described herein handle the encoded content so that the procedures and systems are applicable to all data streams encoded using any encoding format.

In one embodiment, a broadcast data stream is received in which the broadcast data stream is encoded using any encoding format. The received broadcast data stream is demultiplexed and stored on a storage device. The broadcast data stream is then time shifted.

In another embodiment, a digital data stream is received and separated into components. The components of the digital data stream are stored on a storage device. A command to play back the digital data stream is received, causing the retrieval of the stored components from the storage device. The retrieved components of the digital data stream are rendered in a manner that corresponds to the play back command.

In a described embodiment, the storage device is a hard disk drive.

A particular embodiment stores the data stream in a plurality of temporary files on a hard disk drive.

In a particular embodiment, multiple systems retrieve the stored data stream simultaneously.

### BRIEF DESCRIPTION OF THE DRAWINGS

Fig. 1 illustrates a block diagram of an exemplary prior art time shifting system capable of processing MPEG-2 broadcast data.
Fig. 2 illustrates a block diagram of a system capable of time shifting and/or recording multiple streams of broadcast data.
Fig. 3 illustrates a block diagram of a system having time shifting and DVR functionality.
Fig. 4 is a flow diagram illustrating a procedure for capturing and storing data from a received data stream.
Fig. 5 is a flow diagram illustrating a procedure for rendering data contained in a data stream stored on a data storage device.
Fig. 6 illustrates a block diagram of a system having a single capture graph and multiple rendering graphs.
Fig. 7 illustrates a block diagram of a system having buffering functionality to buffer an IP multicast data stream.
Fig. 8 illustrates the buffering of a television broadcast into multiple temporary files.
Fig. 9 illustrates the buffering of a television broadcast into multiple temporary files and the DVR recording of a particular television program.
Fig. 10 illustrates an example of a suitable operating environment in which the data recording systems and methods described herein may be implemented.

### DETAILED DESCRIPTION

The systems and methods described herein provide for the implementation of time shifting and DVR operations that are performed independently of the format associated with the received broadcast stream of data. The time shifting and DVR operations described herein can be performed on any stream of data, regardless of the source of the data or the encoding techniques used to format the data prior to broadcast. Thus, the systems and methods can be used with a variety of different encoding formats, including future encoding formats that have not yet been developed. Any streaming and/or broadcast data, including Internet broadcasts or multicasts, from any source can be captured and processed using the procedures discussed herein. The time shifting and DVR functions described herein operate on the multimedia content substreams themselves, thereby separating the functionality of time shifting and recording from the storage format or encoding format. The methods and systems described herein operate on any type of digital data.

The time shifting and DVR systems and methods described herein can operate with various streaming multimedia applications, such as Microsoft® DirectShow® application programming interface available from Microsoft Corporation of Redmond, Washington. Although particular examples are described with respect to the DirectShow® multimedia application, other multimedia applications and application programming interfaces can be used in a similar manner to provide the described time shifting and DVR functionality.

As used herein, the term "broadcast data" refers to any stream of data, such as television broadcasts, radio broadcasts, and Internet Protocol (IP) multicasts across a network, such as the Internet, and multimedia data streams. A broadcast stream of data may include any type of data, including combinations of different types of data, such as video data, audio data and Internet Protocol (IP) data (e.g., IP packets). Broadcast data may be received from any number of data sources via any type of communication medium.

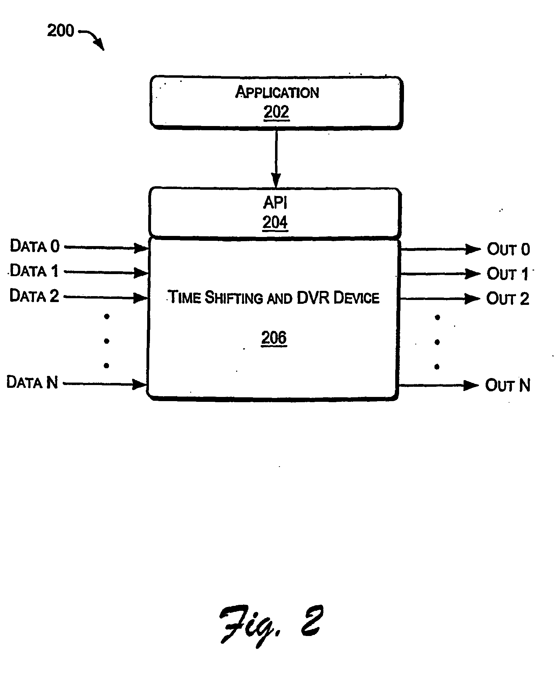

Fig. 2 illustrates a block diagram of a system 200 capable of time shifting and/or recording multiple streams of broadcast data. An application 202 communicates through an application programming interface (API) 204 to a time shifting and DVR device 206. Time shifting and DVR device 206 receives (or captures) data from one or more broadcast data streams, labeled Data 0, Data 1, Data 2, ... , Data N. Different data streams may originate from different data sources, contain different types of data, and utilize different formats (e.g., different encoding algorithms). One or more output data streams can be generated by time shifting and DVR device 206. These output data streams are labeled Out 0, Out 1, Out 2, ... , Out N. The output data streams may be from the same broadcast and provided to one or more users. For example, Out 0 may be providing data from the beginning of a multimedia presentation to a first user while Out 1 is providing data from the middle of the same multimedia presentation to a second user. Alternatively, the output data streams may be associated with different broadcasts stored by the time shifting and DVR device 206. For example, Out 1 may be providing data from a television broadcast to a first user while Out 2 is providing data from a multimedia presentation to a second user. In one implementation, each broadcast is handled by a separate instance of the device. Additional details regarding the operation of time shifting and DVR device 206 are provided below.

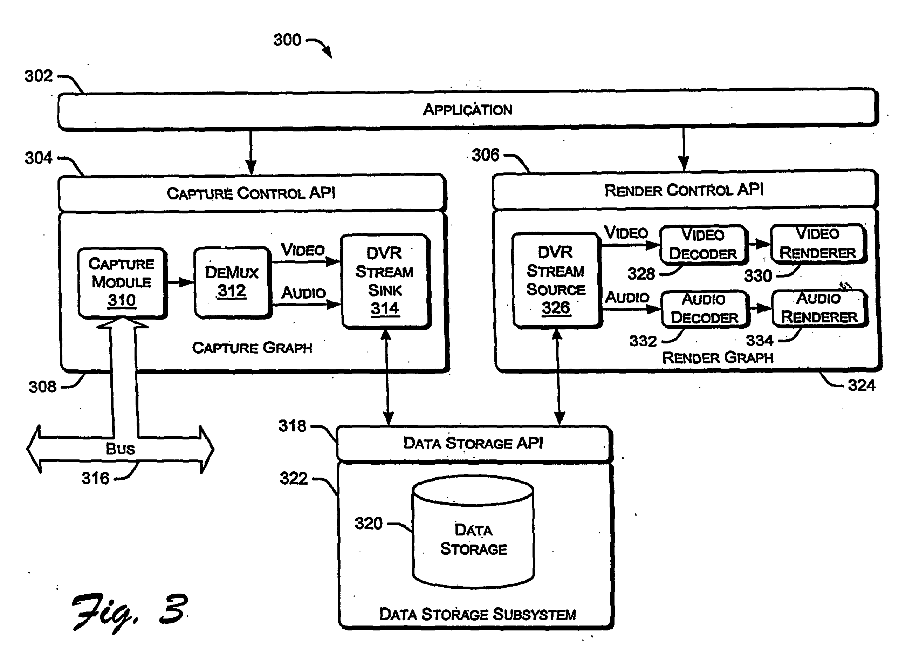

Fig. 3 illustrates a block diagram of a system 300 having time shifting and DVR functionality. All or part of system 300 may be contained in a set top box, cable box, VCR, digital television recorder, personal computer, game console, or other device. An application 302 communicates with a capture control API 304 and a render control API 306. For example, application 302 may send "start", "stop", or "tune" instructions to capture control API 304. Similarly, application 302 may send "seek", "skip", ''rewind'', "fast forward", and "pause" instructions to render control API 306. In one embodiment, application 302 controls various time shifting and DVR functions based on user input, pre-programmed instructions, and/or predicted viewing habits and preferences of the user.

Capture control API 304 communicates with a capture graph 308, which includes a capture module 310, a demultiplexer 312, and a DVR stream sink 314. Capture graph 308 is a type of DirectShow® filter graph that is associated with broadcast streams. DirectShow® is a multimedia streaming specification consisting of filters and COM interfaces. DirectShow® supports media playback, format conversion, and capture tasks. DirectShow® is based on the Component Object Model (COM). A filter is a unit of logic that is defined by input and output media types and is configured and/or queried via COM interfaces. A filter graph is a logical grouping of connected DirectShow® filters. Filters are run, stopped, and paused as a unit. Filters also share a common clock.

Capture graph 308 is a type of DirectShow® filter graph that is associated with broadcast streams. Capture module 310 receives broadcast data streams via a bus 316, such as a universal serial bus (USB). The broadcast stream received by capture module 310 is provided to demultiplexer 312, which separates the broadcast stream into separate components, such as a video component and an audio component. The separate components are then provided to DVR stream sink 314, which communicates with a data storage subsystem 322 through a data storage API 318. Data storage subsystem 322 includes one or more data storage devices 320 for storing various information, including temporary and permanent data associated with one or more broadcast streams.

Render control API 306 communicates with a render graph 324, which includes a DVR stream source 326, a video decoder 328, a video renderer 330, an audio decoder 332, and an audio renderer 334. Render graph 324 is another type of DirectShow® filter graph that is associated with broadcast streams. DVR stream source 326 communicates with data storage subsystem 322 through data storage API 318 to retrieve stored broadcast stream data from data storage device 320. The video component of the data retrieved by DVR stream source is provided to video decoder 328 and the audio component of the data is provided to audio decoder 332. Video decoder decodes the video data and provides the decoded video data to video renderer 330. Audio decoder 332 decodes the audio data and provides the decoded audio data to audio renderer 334. Video renderer 330 displays or otherwise renders video data and audio renderer 334 plays or otherwise renders the audio data.

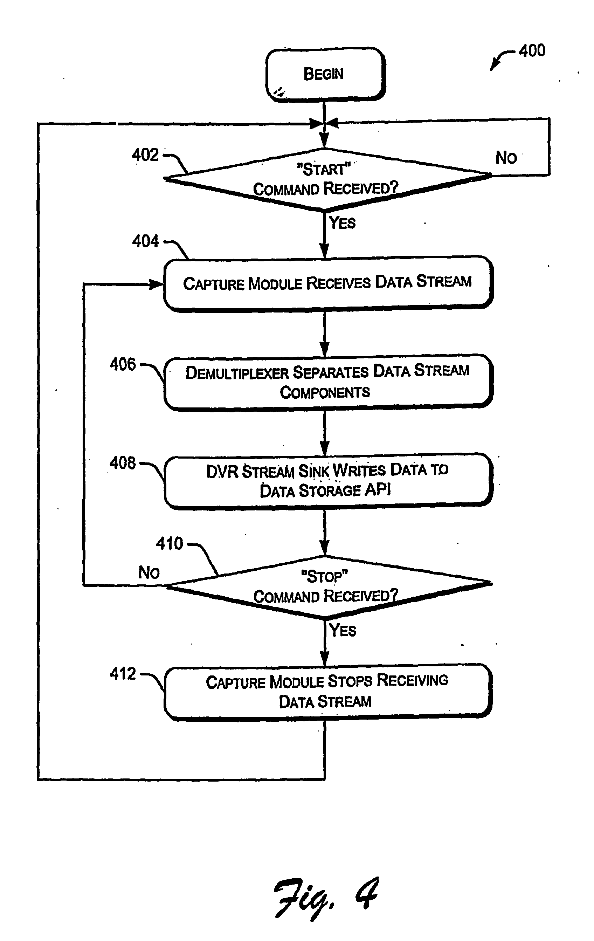

Fig. 4 is a flow diagram illustrating a procedure 400 for capturing and storing data from a received data stream. For example, the procedure for capturing a data stream may be performed by capture graph 308 (Fig. 3). Initially, procedure 400 determines whether a "start" command has been received (block 402). Such a command may be received, for example, from application 302 based on a user input or a pre-programmed command. If a "start" command is not received, the procedure returns to block 402. If a "start" command is received, a capture module receives a data stream (block 404) and a demultiplexer separates the data stream components (block 406). The data stream components may include, for example, audio data and video data. Next, a DVR stream sink writes the data stream components to a data storage API (block 408). Additionally, the DVR stream sink may write certain attributes and other data to the data storage API along with the data stream components. The data storage API then stores the data stream components to a data storage device for later retrieval.

At block 410, procedure 400 determines whether a "stop" command has been received. If so, the capture module stops receiving the data stream (block 412). The procedure then returns to block 402 to await another "start" command. If a "stop" command is not received, the procedure returns to block 404 to continue receiving and processing the data stream.

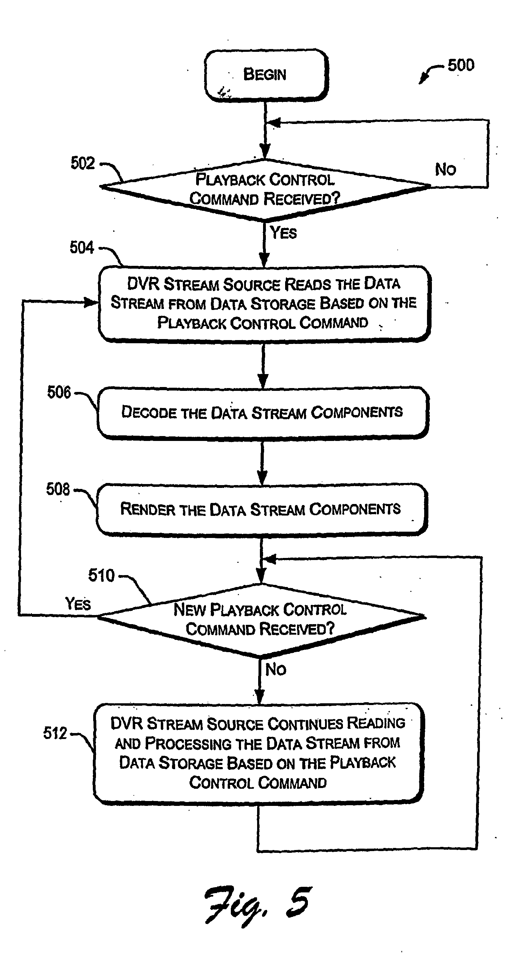

Fig. 5 is a flow diagram illustrating a procedure 500 for rendering data contained in a data stream stored on a data storage device. Initially, procedure 500 determines whether a playback control command has been received (block 502). Playback control commands may include "pause", ''play'', "fast forward", "rewind", "slow motion forward", "slow motion backward", "seek", "skip forward", "skip backward", and other commands that affect the rendering of the data stream. If a playback control command is not received, the procedure branches to block 502 to await a playback control command. If a playback control command is received, the DVR stream source reads the data stream from the data storage device based on the playback control command (block 504). For example, if the playback command is ''play'', the DVR stream source reads data beginning with the last data read, such as the data read before a "pause" command was received. If the playback command is "slow motion backward", the DVR stream source reads data beginning at the same location, but in the reverse direction (i.e., going backwards in time).

At block 506, the procedure decodes the data stream components (e.g., decode the audio component and decode the video component). Next, the data stream components are rendered at block 508. At block 510, procedure 500 determines whether a new playback control command has been received. If not, the procedure returns to block 504 to continue reading the data stream from the data storage device based on the most recent playback control command. If a new playback control command is received, the DVR stream source continues reading and processing the data stream from the data storage device based on the new playback control command (block 512). However, if the new playback control command is "pause" or "stop", the DVR stream source stops reading the data stream until a new playback control command is received that requires reading of the data stream.

The rendering controls are independent of the capture controls, such that the rendering controls (e.g., pausing playback, fast-forwarding or rewinding) do not affect the capturing of the broadcast data stream. Similarly, stopping the capturing of the broadcast data stream does not alter the ability of the rendering controls to retrieve and render the previously stored data stream components.

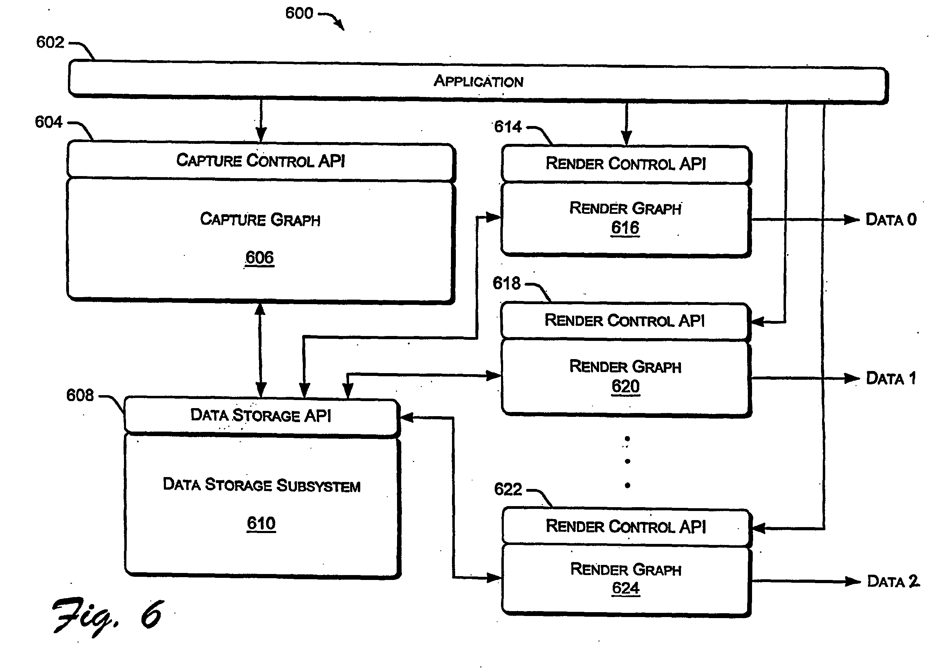

Fig. 6 illustrates a block diagram of a system 600 having a single capture graph and multiple rendering graphs. An application 602 communicates with a capture control API 604 and multiple render control APIs 614, 618, and 622. Capture control API 604 communicates with a capture graph 606, which is similar to capture graph 308, discussed above. Capture graph 606 stores broadcast data streams to a data storage device by communicating with a data storage API 608, which communicates with a data storage subsystem 610. Multiple render graphs 616, 620, and 624 are configured to retrieve data from the data storage device by communicating with data storage API 608. Each render graph generates a different data stream (Data 0, Data 1 or Data 2) based on the playback control commands received from application 602. Each render graph 616, 620, and 624 may be associated with a particular user, allowing each user to view different portions of the same broadcast data stream or to view different broadcast data streams (e.g., different television programs recorded in the storage device).

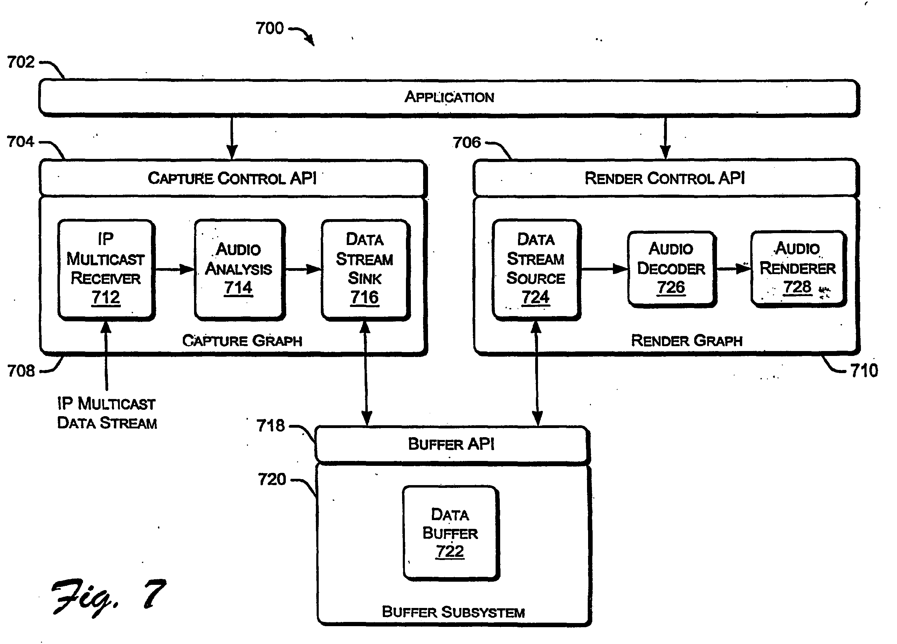

Fig. 7 illustrates a block diagram of a system 700 having buffering functionality to buffer an IP multicast data stream. An application program 702 allows a user to control the capturing and rendering of the IP multicast data stream. The IP multicast data stream may be, for example, a data stream from an Internet radio station. In this example, delays or network congestion may affect the rate at which the IP multicast data stream is received. Thus, a data buffering system is used to buffer or "pre-load" data such that a small delay in receiving data from the Internet will not affect the audio signal produced by an audio renderer. The larger the buffer, the greater the delay that can be handled by the system before affecting the audio signal.

Application program 702 communicates with a capture control API 704 and a render control API 706. Capture control API 704 communicates with a capture graph 708, which includes an IP multicast receiver 712, an audio analysis module 714, and a data stream sink 716. IP multicast receiver 712 receives an IP multicast data stream via the Internet or other data communication network. IP multicast receiver 712 provides the received data stream to an audio analysis module 714, which marks the received data stream with attributes, such as time stamps, cleanpoint flags, and discontinuities. Additional details regarding these various attributes are discussed below.

Data stream sink 716 writes the received data stream (including attributes added by audio analysis module 714) to a buffer API 718, which communicates with a buffer subsystem 720. Buffer subsystem 720 includes a data buffer 722, which stores various data related to one or more IP multicast data streams.

Render control API 706 communicates with a render graph 710, which includes a data stream source 724, an audio decoder 726, and an audio renderer 728. Data stream source 724 retrieves buffered data streams from data buffer 722 by issuing commands to buffer API 718. Audio decoder 726 decodes the audio data in the retrieyed data stream such that audio renderer 728 can properly render an audio signal corresponding to the retrieved data stream.

Time shifting and DVR recording require a backing storage device, such as a hard disk drive. Typically, data is written to one or more files on the hard disk drive. Content is written to the file and later (or concurrently), the content is read back out of the file to be decoded and rendered. This backing storage device is useful because a system's core memory is generally insufficient to temporarily store high-speed multimedia content for an arbitrary duration. A particular solution uses a ring buffer to store data received in a data stream. In this example, data is written into multiple files on the hard disk, which spreads the received content across multiple files on the hard disk drive.

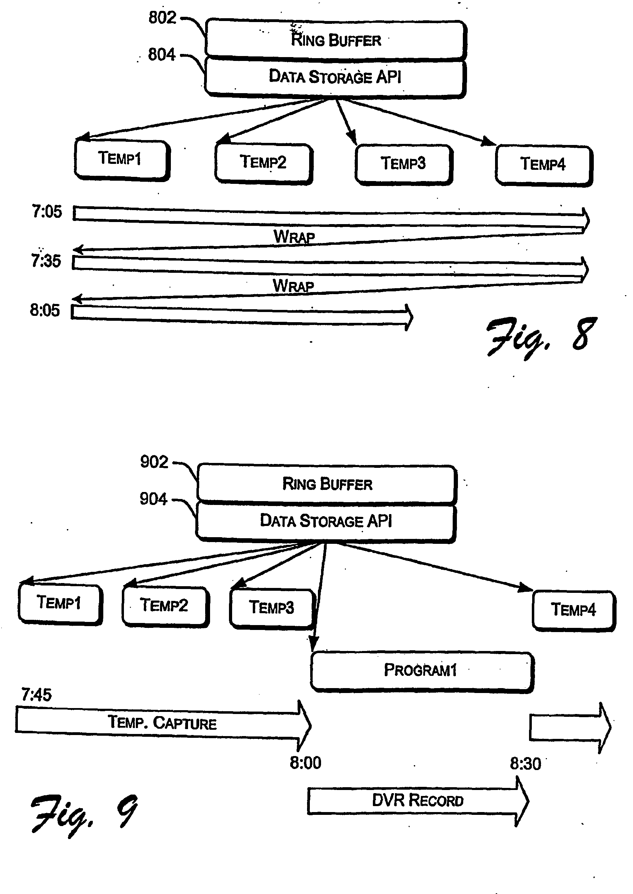

Fig. 8 illustrates the buffering of a television broadcast into multiple temporary files on a storage device, such as a hard disk drive. The system of Fig. 8 represents a thirty minute logical ring buffer 802 backed by four temporary files (labeled Temp1, Temp2, Temp3, and Temp4). Ring buffer 802 communicates with the temporary files through a data storage API 804. Each temporary file has a beginning (start of file) and an end (end of file). The ring buffer consists of the four temporary files logically coupled together by the logical ring buffer 802. Each of the temporary files is accessed through the data storage API 804. The logical ring buffer 802 translates a virtual stream of data into a file and a file offset. A seek operation is performed in terms of time, so the ring buffer tracks the start time for each temporary file. When a virtual time offset is requested, the ring buffer 802 translates the virtual time offset into a file and a file time offset.

For example, a particular ring buffer may organize the four temporary files shown in Fig. 8 such that each temporary file stores 7.5 minutes of broadcast data. Thus, the four files that make up the logical ring buffer provide storage for thirty minutes of broadcast data. If a seek request is received to seek to twenty minutes, the system translates this request into a seek into temporary file Temp3 with a time offset of 5 minutes.

In the example of Fig. 8, a television broadcast stream is captured beginning at 7:05, which causes the fourth temporary file (Temp4) to fill at 7:35. At this point, the system wraps back around and continues recording with the first temporary file (Temp1), thereby overwriting the data previously stored in the first temporary file. This process continues for thirty minutes until 8:05, when the system again wraps around to continue recording at the beginning of the first temporary file.

The separation of the captured data into multiple temporary files is transparent to the user of the system. Additionally, the wrapping from the last multiple file back to the first is transparent to the user and does not disrupt rendering of the broadcast data stream

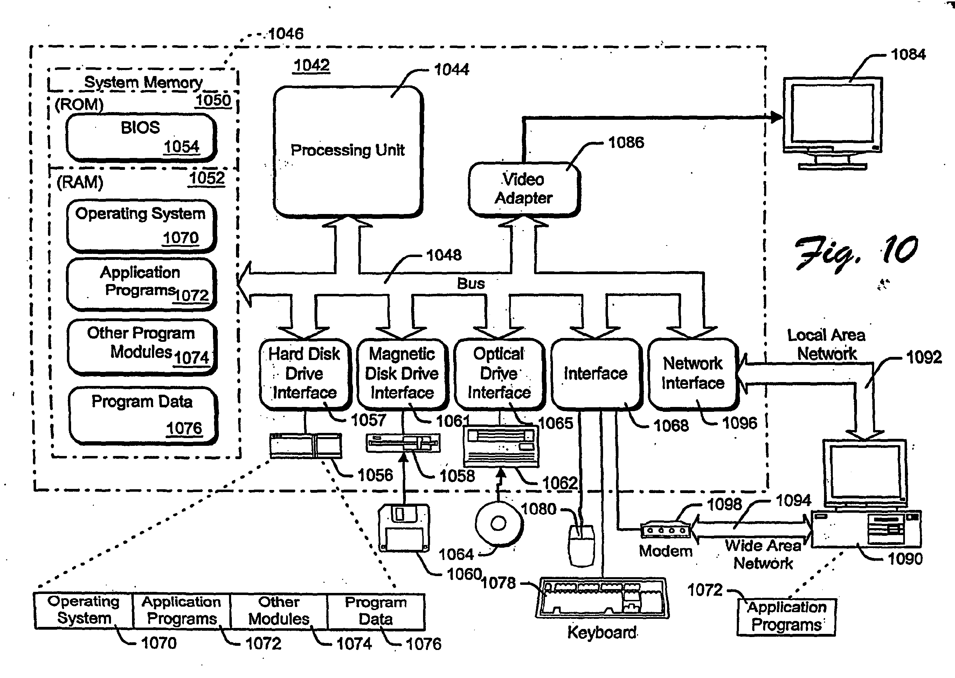

Fig. 9 illustrates the buffering of a television broadcast into multiple temporary files and the DVR recording of a particular television program. A logical ring buffer 902 communicates with a data storage API 904, which communicates with various temporary and permanent files stored on a storage device (not shown). The system of Fig. 9 uses four temporary files (Templ, Temp2, Temp3, and Temp4) for time shifting functions, in the manner discussed above with respect to Fig. 8. Additionally, the system of Fig. 9 uses one or more program files to store programs based on DVR recording requests (e.g., a request to permanently store a particular program or series of programs).

Fig. 9 illustrates a situation in which a background recording operation is scheduled to occur between 8:00 and 8:30, which falls in the middle of a session in which a broadcast stream is being rendered and viewed (i.e., 7:45 - after 8:30). The system of Fig. 9 chains together the four temporary files and the one permanent file (Programl) to present a single recorded broadcast stream to the user of the system. The permanent file is not deleted or overwritten when the temporary files are deleted or overwritten.

In a particular embodiment, multimedia content is treated without regard to its encoding method. Instead, the multimedia content is treated as byte buffers with attributes. Components (e.g., APIs) that understand the multimedia content tag the buffers with various attributes and/or flags, such as: 1) a "cleanpoint" flag, which is applied to the first byte of the buffer, 2) a presentation time stamp applied to the first byte of the buffer, 3) a stream time stamp, which represents the time at which the first byte of the buffer is presented to the system, and 4) a discontinuity flag, which indicates whether there is a connection with previously received data. A "cleanpoint" is a play-start point, and is also referred to as a "keyframe". Some compression schemas leverage redundancy from one frame to the next. Instead of sending a complete frame, only predictive data is sent. The decoder reconstructs a complete frame based on a previously received complete frame and the predictive data. Since the predictive data is not useful without a complete frame from which to reference it, each complete frame is flagged as a "cleanpoint". This is useful for subsequent seek requests and provides a starting point from which to resume playback. The discontinuity flag is useful in, for example, MPEG-2 because video is received as groups of pictures (GOPs) which have one reference frame and several derived frames. If a discontinuity occurs in the middle of a GOP, the decoder will discard all subsequent frames until it receives the next GOP's reference frame.

When storing data to the data storage subsystem, the system translates higher-level flags and attributes to those required by the data storage API. The system then determines the specific file in the data storage subsystem that will receive the content. Finally, the content is written with the associated flags and attributes into the file via the data storage API.

When retrieving data from the data storage subsystem, the system maintains a context for each reader. The system determines the file that contains the data to be retrieved. The data is retrieved with its flags and attributes. The flags and attributes are then translated to those required by the higher-level multimedia layer. The read call is then completed.

Seeking forwards and backwards is based on a time relative to now (i.e., the current time). Based on relative time from now, the system determines the file from which the data will be read. The absolute time offset is then translated to a file-specific time offset. The system then seeks, via the data storage API, to the computed time offset. The data is then retrieved using the procedure discussed above.

The data storage API provides the ability to perform various operations, such as:
- multiplexing multiple streams into a file (and distinguishing each stream from the others),
- ensuring that the data retrieval order matches the data storage order,
- associating a timestamp with data and retrieving the timestamp upon retrieval of the data,
- associating one or more variable-sized attributes with data and retrieving the attributes upon retrieval of the data,
- associating a generic marker with specific data and seeking to that marker,
- indexing on time and seeking to data based on that time, and
- providing support for a Digital Rights Management framework.

In one implementation, the Windows Media SDK API, available from Microsoft Corporation of Redmond, Washington, is used as the data storage API discussed above. Additionally, data is stored in the data storage subsystem using the Advanced Streaming Format (ASF), a file format that specifies a definition for streaming media.

Fig. 10 illustrates an example of a suitable operating environment in which the data recording systems and methods described herein may be implemented. The illustrated operating environment is only one example of a suitable operating environment and is not intended to suggest any limitation as to the scope of use or functionality of the invention. Other well-known computing systems, environments, and/or configurations that may be suitable for use with the invention include, but are not limited to, personal computers, server computers, hand-held or laptop devices, multiprocessor systems, microprocessor-based systems, programmable consumer electronics, gaming consoles, cellular telephones, network PCs, minicomputers, mainframe computers, distributed computing environments that include any of the above systems or devices, and the like.

Fig. 10 shows a general example of a computer 1042 that can be used in accordance with the invention. Computer 1042 is shown as an example of a computer that can perform the various functions described herein. Computer 1042 includes one or more processors or processing units 1044, a system memory 1046, and a bus 1048 that couples various system components including the system memory 1046 to processors 1044.

The bus 1048 represents one or more of any of several types of bus structures, including a memory bus or memory controller, a peripheral bus, an accelerated graphics port, and a processor or local bus using any of a variety of bus architectures. The system memory 1046 includes read only memory (ROM) 1050 and random access memory (RAM) 1052. A basic input/output system (BIOS) 1054, containing the basic routines that help to transfer information between elements within computer 1042, such as during start-up, is stored in ROM 1050. Computer 1042 further includes a hard disk drive 1056 for reading from and writing to a hard disk, not shown, connected to bus 1048 via a hard disk drive interface 1057 (e.g., a SCSI, ATA, or other type of interface); a magnetic disk drive 1058 for reading from and writing to a removable magnetic disk 1060, connected to bus 1048 via a magnetic disk drive interface 1061; and an optical disk drive 1062 for reading from and/or writing to a removable optical disk 1064 such as a CD ROM, DVD, or other optical media, connected to bus 1048 via an optical drive interface 1065. The drives and their associated computer-readable media provide nonvolatile storage of computer readable instructions, data structures, program modules and other data for computer 1042. Although the exemplary environment described herein employs a hard disk, a removable magnetic disk 1060 and a removable optical disk 1064, it will be appreciated by those skilled in the art that other types of computer readable media which can store data that is accessible by a computer, such as magnetic cassettes, flash memory cards, random access memories (RAMs), read only memories (ROM), and the like, may also be used in the exemplary operating environment.

A number of program modules may be stored on the hard disk, magnetic disk 1060, optical disk 1064, ROM 1050, or RAM 1052, including an operating system 1070, one or more application programs 1072, other program modules 1074, and program data 1076. A user may enter commands and information into computer 1042 through input devices such as keyboard 1078 and pointing device 1080. Other input devices (not shown) may include a microphone, joystick, game pad, satellite dish, scanner, or the like. These and other input devices are connected to the processing unit 1044 through an interface 1068 that is coupled to the system bus (e.g., a serial port interface, a parallel port interface, a universal serial bus (USB) interface, etc.). A monitor 1084 or other type of display device is also connected to the system bus 1048 via an interface, such as a video adapter 1086. In addition to the monitor, personal computers typically include other peripheral output devices (not shown) such as speakers and printers.

Computer 1042 operates in a networked environment using logical connections to one or more remote computers, such as a remote computer 1088. The remote computer 1088 may be another personal computer, a server, a router, a network PC, a peer device or other common network node, and typically includes many or all of the elements described above relative to computer 1042, although only a memory storage device 1090 has been illustrated in Fig. 10. The logical connections depicted in Fig. 10 include a local area network (LAN) 1092 and a wide area network (WAN) 1094. Such networking environments are commonplace in offices, enterprise-wide computer networks, intranets, and the Internet. In certain embodiments, computer 1042 executes an Internet Web browser program (which may optionally be integrated into the operating system 1070) such as the "Internet Explorer" Web browser manufactured and distributed by Microsoft Corporation of Redmond, Washington.

When used in a LAN networking environment, computer 1042 is connected to the local network 1092 through a network interface or adapter 1096. When used in a WAN networking environment, computer 1042 typically includes a modem 1098 or other means for establishing communications over the wide area network 1094, such as the Internet. The modem 1098, which may be internal or external, is connected to the system bus 1048 via a serial port interface 1068. In a networked environment, program modules depicted relative to the personal computer 1042, or portions thereof, may be stored in the remote memory storage device. It will be appreciated that the network connections shown are exemplary and other means of establishing a communications link between the computers may be used.

Computer 1042 typically includes at least some form of computer readable media. Computer readable media can be any available media that can be accessed by computer 1042. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other media which can be used to store the desired information and which can be accessed by computer 1042. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as wired network or direct-wired connection, and wireless media such as acoustic, RF, infrared and other wireless media. Combinations of any of the above should also be included within the scope of computer readable media.

The invention has been described in part in the general context of computer-executable instructions, such as program modules, executed by one or more computers or other devices. Generally, program modules include routines, programs, objects, components, data structures, etc. that perform particular tasks or implement particular abstract data types. Typically the functionality of the program modules may be combined or distributed as desired in various embodiments.

For purposes of illustration, programs and other executable program components such as the operating system are illustrated herein as discrete blocks, although it is recognized that such programs and components reside at various times in different storage components of the computer, and are executed by the data processor(s) of the computer.

Although the description above uses language that is specific to structural features and/or methodological acts, it is to be understood that the invention defined in the appended claims is not limited to the specific features or acts described. Rather, the specific features and acts are disclosed as exemplary forms of implementing the invention.

The following is a list of further preferred embodiments of the invention:
Embodiment 1: A method comprising:
   receiving a broadcast data stream, wherein the broadcast data stream is encoded using any encoding format;
   demultiplexing the received broadcast data stream;
   storing the received broadcast data stream on a storage device; and time shifting the broadcast data stream.
Embodiment 2: A method as recited in embodiment 1 wherein the broadcast data stream is a digital data stream.
Embodiment 3: A method as recited in embodiment 1 wherein the broadcast data stream may utilize any data format.
Embodiment 4: A method as recited in embodiment 1 wherein storing the received broadcast data stream on a storage device includes writing the broadcast data stream to an application programming interface.
Embodiment 5: A method as recited in embodiment 1 further comprising retrieving the broadcast data stream from the storage device.
Embodiment 6: A method as recited in embodiment 1 further comprising multiple systems retrieving the broadcast data stream simultaneously.
Embodiment 7: A method as recited in embodiment 1 further comprising retrieving different portions of the broadcast data stream simultaneously.
Embodiment 8: A method as recited in embodiment 1 wherein the received broadcast stream is stored on the storage device using a plurality of temporary files.
Embodiment 9: A method as recited in embodiment 1 wherein the received broadcast stream is stored on the storage device using a single temporary file.
Embodiment 10: A method as recited in embodiment 1 wherein the received broadcast stream is stored on the storage device using at least one permanent file.
Embodiment 11: One or more computer-readable memories containing a computer program that is executable by a processor to perform the method recited in embodiment 1.

## Claims

1. A method comprising:
receiving a digital data stream;
separating components of the digital data stream;
storing the components of the digital data stream on a storage device;
receiving a command to play back the digital data stream;
retrieving at least one of the stored components of the digital data stream from the storage device; and
rendering the components of the digital data stream in a manner that corresponds to the received play back command.

2. A method as recited in claim 1 further comprising:
receiving a command to pause play back of the digital data stream; and
halting rendering of the components of the digital data stream in response to the pause command.

3. A method as recited in claim 1 wherein the play back command is a play command.

4. A method as recited in claim 1 wherein the play back command is a rewind command.

5. A method as recited in claim 1 wherein the play back command is a fast forward command.

6. A method as recited in claim 1 wherein the play back command is a seek command.

7. A method as recited in claim 1 wherein the play back command is a slow motion play command.

8. A method as recited in claim 1 wherein the play back command is a skip forward command.

9. A method as recited in claim 1 wherein the play back command is a skip backward command.

10. A method as recited in claim 1 wherein storing the components of the digital data stream on a storage device includes writing the components of the digital data stream to an application programming interface.

11. A method as recited in claim 1 wherein the storage device is a hard disk drive.

12. A method as recited in claim 1 wherein the storage device is a hard disk drive and components of the digital data stream are stored in at least one temporary file or at least one permanent file on the hard disk drive.

13. A method as recited in claim 1 wherein the digital data stream can be encoded using any encoding format.

14. A method as recited in claim 1 wherein the digital data stream may utilize any data format.

15. A method as recited in claim 1 wherein multiple devices retrieve the stored components of the digital data stream simultaneously.

16. A method as recited in claim 1 wherein retrieving the stored components of the digital data stream includes:
a first device retrieving data associated with a first data stream stored on the storage device; and
a second device simultaneously retrieving data associated with a second data stream stored on the storage device.

17. A method as recited in claim 1 wherein retrieving the stored components of the digital data stream includes:
a first device retrieving data from a first location in the digital data stream; and
a second device simultaneously retrieving data from a second location in the digital data stream.

18. A method as recited in claim 1 wherein separating components of the digital data stream includes demultiplexing video data and audio data from the digital data stream.

19. A method as recited in claim 1 wherein separating components of the digital data stream includes demultiplexing Internet Protocol data from the digital data stream.

20. One or more computer-readable memories containing a computer program that is executable by a processor to perform the method recited in claim 1.

21. A method comprising:
receiving a broadcast data stream;
separating components of the broadcast data stream;
storing the components of the broadcast data stream on a storage device;
retrieving the components of the broadcast data stream from the storage device;
rendering the components of the broadcast data stream; and
receiving a request to pause rendering of the broadcast data stream, in response to the pause request:
halting rendering of the broadcast data stream;
continuing to store the components of the broadcast data stream on the storage device.

22. A method as recited in claim 21 wherein the broadcast data stream is a television broadcast.

23. A method as recited in claim 21 wherein the broadcast data stream is a digital data stream.

24. A method as recited in claim 21 further comprising:
receiving a request to resume rendering of the broadcast data stream; and
rendering the broadcast data stream based on the request to resume rendering of the broadcast data stream.

25. One or more computer-readable memories containing a computer program that is executable by a processor to perform the method recited in claim 21.

26. One or more computer-readable media having stored thereon a computer program that, when executed by one or more processors, causes the one or more processors to:
separate the components of a broadcast data stream;
store the components of the broadcast data stream on a hard disk drive;
receive a request to play back the stored components of the broadcast data stream;
retrieving the stored components of the broadcast data stream from the hard disk drive; and
rendering the components of the broadcast stream.

27. One or more computer-readable media as recited in claim 26 wherein rendering the components of the broadcast stream includes rendering the components of the broadcast stream in a manner that corresponds to the received play back request.

28. One or more computer-readable media as recited in claim 26 wherein rendering the components of the broadcast stream includes rendering multiple copies of the broadcast stream simultaneously.

29. One or more computer-readable media as recited in claim 26 wherein the broadcast data stream is a television broadcast.

30. One or more computer-readable media as recited in claim 26 wherein the separate components of a broadcast data stream are audio data and video data.

31. One or more computer-readable media as recited in claim 26 wherein the separate components of a broadcast data stream include Internet Protocol data.

32. An apparatus comprising:
a capture module configured to capture a data stream, wherein the data stream may be represented in a plurality of different data formats;
a data storage module configured to store the captured data stream; and
a rendering module configured to render the data stream from the data stored on the data storage module.

33. The apparatus of claim 32 wherein the data stream is encoded using any encoding format.

34. The apparatus of claim 32 wherein the data storage module stores the captured data stream prior to decoding the captured data stream.

35. The apparatus of claim 32 wherein the capture module is further configured to separate the components of the data stream and the data storage module is further configured to store each of the separate components of the data stream.

36. The apparatus of claim 32 wherein the data storage module includes at least one hard disk drive.
